Europäisches Patentamt

European Patent Office

Office européen des brevets

(11) Publication number: **0 287 245**
**A2**

# EUROPEAN PATENT APPLICATION

(21) Application number: 88302912.6

(22) Date of filing: 31.03.88

(51) Int. Cl.4: **C08L 67/00 , C08L 33/00 , C08L 25/00 , E05D 1/02 , E05D 9/00**

(30) Priority: **15.04.87 JP 92744/87**

(43) Date of publication of application:
**19.10.88 Bulletin 88/42**

(84) Designated Contracting States:
**AT BE CH DE ES FR GB GR IT LI LU NL SE**

(71) Applicant: **POLYPLASTICS CO. LTD.**
**30, Azuchimachi 2-chome**
**Higashi-ku Osaka-shi Osaka(JP)**

(72) Inventor: **Takahashi, Katsuhiko**
**324, Miyashita**
**Fuji-shi Shizuoka(JP)**
Inventor: **Iiyama, Makoto**
**338-6, Yunoki**
**Fuji-shi Shizuoka(JP)**
Inventor: **Kojima, Matsushi**
**885-11, Miyajima**
**Fuji-shi Shizuoka(JP)**
Inventor: **Mochizuki, Mitsuhiro**
**945-3, Tenma**
**Fuji-shi Shizuoka(JP)**

(74) Representative: **Jackson, Peter et al**
**HYDE, HEIDE & O'DONNELL 146 Buckingham**
**Palace Road**
**London SW1W 9TR(GB)**

(54) Hinge member.

(57) A hinge member can be obtained by molding a composite comprising

(A) a thermoplastic polyester resin of 99 to 40 parts by weight and

(B) a polymer obtained by homopolymerizing one kind or copolymerizing two or more kinds selected from the group consisting of vinyl cyanide compounds, acrylic esters, acrylic acid, methacrylic esters, methacrylic acid and aromatic vinyl compounds of 1 to 60 parts by weight.

## HINGE MEMBER

(Field of the Invention)

The present invention relates to a hinge member having superior hinge characteristics. In particular it relates to a hinge member comprising a resin composite of (A) a thermoplastic polyester resin and (B) a polymer obtained by homopolymerizing one kind or copolymerizing two or more kinds selected from the group consisting of vinylcyanide compounds, acrylic esters, acrylic acid, methacrylic esters, methacrylic acid and aromatic vinyl compounds.

Brief Description of the Drawings

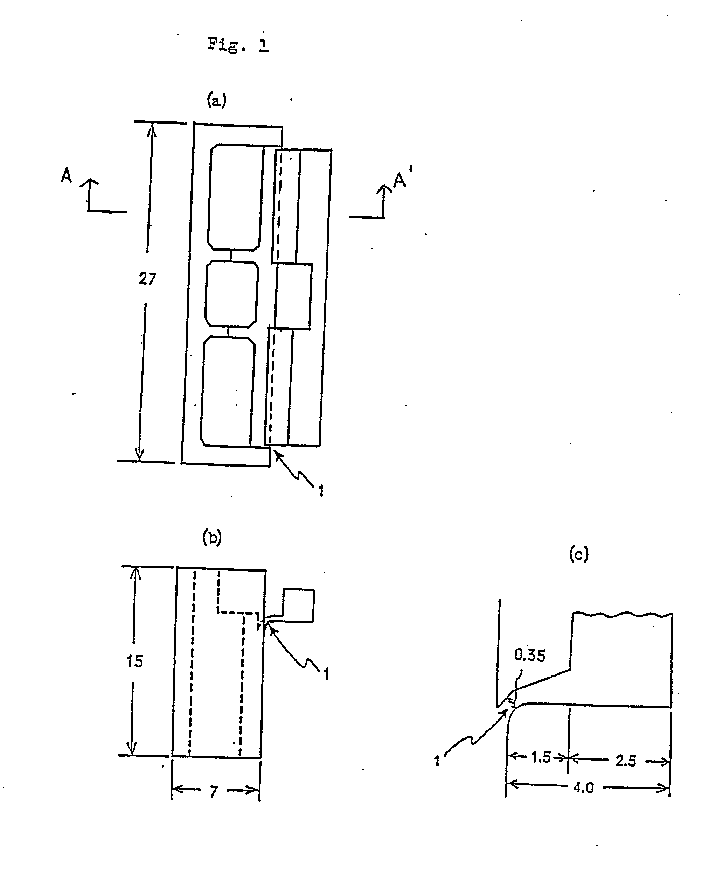

Figure 1 is a set of drawings showing three views of a hinge member according to the invention. This was used as described below as a test piece for the measurement of its hinge characteristics.

Figure 1(a) is a plan view of the hinge member;

Figure 1(b) is a side view of the hinge member; and

Figure 1(c) is a sectional view taken along line A-A' of figure (a) of a portion of the hinge member. It thus provides a sectional view of a portion of Figure 1(b) but on a larger scale. Reference numeral 1 designates a portion of the hinge member. The other numeral values on the drawings represent the dimensions of the hinge member in mm.

The hinge is provided by a thin-walled portion (designated in Figure 1 by reference numeral 1), of a hinge member to which a bending load is repeatedly applied. The hinge is· not specially limited in shape: it may for example be sheet-like, band-like or string-like. Similarly there are no particular limits on its thickness and length. The present invention includes within its scope articles which include a portion which functions as a hinge according to the invention.

In the present specification, hinge characteristics are defined as the durability of the above described hinge against repeated bending.

(Prior Art and Problems to be Solved)

Thermoplastic resins have been widely used in place of metals due to their easy workability and the like. Above all, since thermoplastic resins are superior also in mechanical strength and other physical and chemical characteristics, they have been widely used as parts of cars, electric and electronic apparatus, office apparatus, other precision instruments, building materials, miscellaneous goods and the like. However, in these fields, special properties are additionally required in most cases. One of such special properties is hinge characteristics.

Above all, the case where it is desired to integrate some parts using hinges to make an assembly easy and inexpensive on account of the requirement of reducing a cost by reducing a number of parts in recent years is being increased. In addition, there are many factors deteriorating the hinge characteristics such as the use of a hinge member at low temperatures and the difficulty of giving a shape of hinge preferable in view of construction, whereby the requirement of essentially superior hinge characteristics has been·made still more severe.

In order to meet such requirements, a method, in which rubbery substances are added to thermoplastic polyester resins to improve hinge characteristics, and the like have been known.

It goes without saying that hinge characteristics can be improved to some extent even by this method but further severe requirements can not be always satisfied and great defects occur in that other physical properties, such as rigidity and shearing strength, are lowered.

It is an object of the present invention to provide a hinge member having hinge characteristics superior in comparison with those of the conventional hinges without spoiling other physical properties.

(Measures for Solving the Problems)

The present inventors achieved the present invention from their repeated earnest investigations aiming at the dissolution of the above described problems and the provision of a thermoplastic resin molded product having various kinds of superior property incidental to thermoplastic resins and superior in hinge characteristic.

That is to say, the present invention relates to a hinge member superior in hinge characteristics obtained by molding a composite comprising (A) a thermoplastic polyester resin of 99 to 40 parts by weight and (B) a polymer obtained by homopolymerizing one kind or copolymerizing two kinds or more selected from the group consisting of vinylcyanide compounds, acrylic esters, acrylic acid, methacrylic esters, methacrylic acid and aromatic vinyl compounds of 1 to 60 parts by weight.

Certain composites falling within the above definition have previously been proposed as useful resins but not as hinge-forming materials. Neither the hinge forming characteristics of such materials nor the defined range of composites found by the present inventors to have the hinge characteristics had been expected prior to the investigations of the present inventors.

The thermoplastic polyesters used in the present invention include polyesters obtained by the polycondensation of dicarboxylic acid compounds and dihydroxy compounds, polycondensation of oxycarboxylic acid, polycondensation of mixtures comprising these three ingredients or the like. Either homopolyesters or copolyesters can achieve the effects of the present invention.

The dicarboxylic acid compounds used in the present invention include known dicarboxylic acid compounds, such as compounds of terephthalic acid, isophthalic acid, naphthalene dicarboxylic acid, diphenyldicarboxylic acid, diphenyletherdicarboxylic acid, diphenylethanedicarboxylic acid, cyclohexanedicarboxylic acid, adipic acid and cebacic acid, alkyl-, alkoxy-or halogen-substitutes thereof and the like. In addition, these dicarboxylic acid compounds can be used in the form of ester-formable derivatives, for example lower alcohol esters such as dimethyl ester. According to the present invention, the above described compounds are used singly or in combination.

Nextly, the dihydroxy compounds include dihydroxy compounds, such as ethylene glycol, propylene glycol, butane diol, neopentyl glycol, hydroquinone, resolcine, dihydroxyphenyl, naphthalene diol, hydroxydiphenyl ether, cyclohexane diol and 2, 2-bis(4-hydroxyphenyl) propane, polyoxyalkylene glycols, alkyl-, alkoxy-or halogen-substitutes thereof and the like. They can be used singly or in combination.

In addition, the oxycarboxylic acids include oxycarboxylic acids, such as oxybenzoic acid, oxynaphthoic acid and diphenylene oxycarboxylic acid, and alkyl-, alkoxy-or halogen-substitutes thereof. Also ester-formable derivatives of these compounds can be used. According to the present invention, these compounds are used singly or in combination.

According to the present invention, every thermoplastic polyester formed by the polycondensation of the above described compounds as monomer ingredients, preferably polyalkylene terephthalates, still more preferably polybutylene terephthalate, can be used singly or in combination to attain the effects of the present invention.

In addition, according to the present invention, the thermoplastic polyesters may be modified by the known cross-linking, graft-polymerization and the like.

Next, the polymer (ingredient B) constructing the above described thermoplastic resins in the present invention is obtained by homopolymerizing one kind or copolymerizing two kinds or more selected from the group consisting of vinylcyanide compounds, such as acrylonitril and methacrylonitril, and acrylic esters, such as methyl acrylate, ethyl acrylate, methyl methacrylate and butyl acrylate, methacrylic esters, such as methyl methacrylate, ethyl methacrylate and butyl methacrylate, and aromatic vinyl compounds, such as acrylic acid, methacrylic acid, styrene and α-methyl styrene. The polymers (ingredient B) are added to the thermoplastic polyester resins singly or in combination.

More concretely speaking, acrylonitrilestyrene copolymers, acrylonitrile-methyl methacrylate copolymers, methyl acrylate-methyl methacrylate copolymers, polymethyl methacrylate, methyl methacrylate-acrylic acid copolymers, methyl methacrylate-styrene copolymers, polystyrene and the like.

In addition, such the polymer may be modified by copolymerizing a small amount of ethylenic compounds, rubbery ingredients, acid anhydrides and the like thereto or graft-polymerizing them thereto and the like.

According to the present invention, of such polymers, acrylonitrile-styrene copolymers, polymethyl methacrylate and polystyrene are preferably used.

In addition, according to the present invention, such polymers (ingredient B) are used at a ratio of 1 to 60 parts by weight based on 99 to 40 parts by weight of thermoplastic polyester resins (ingredient A). In the case where they are used at a ratio less then 1 part by weight, a sufficient improvement of hinge characteristics can not be attained while in the case where they are used at a ratio exceeding 60 parts by weight, not only superior characteristics, such as mechanical properties, physical properties and chemical properties, incidental to thermoplastic polyesters are lost but also the workability, surface state and the like are hindered according to circumstances, which is not preferable. Preferably, the ingredient B is added at a ratio of 3 to 50 parts by weight.

In addition, in order to improve physical properties, various kinds of known additive can be added to the composite, of which the hinge member of the present invention is formed. Said additives include antioxidants, weather-proof agents and light-proof agents, heat-stabilizers, unguents, releasing agents, nucleus agents, flame-retardants, antistatic agents, surfactants, coloring agents and the like.

Also a small amount of other thermoplastic resins and fibrous, plate-like, powdery and granular inorganic fillers, such as glass, can be supplementarily added to the composite for use in the hinge member of the present invention so far as the objects of the present invention are not hindered to improve other physical properties.

The hinge member according to the present invention can be easily obtained by the known manufacturing methods and molding methods which have been applied for the conventional resins and the like with additives.

For example, a method i), in which the ingredients are mixed and then the resulting mixture is blended and extruded by an extruder to prepare pellets and subsequently, the pellets are molded; a method ii), in which pellets different in composition are prepared and blended and molded to obtain a molded product formed of the composite according to the present invention; a method iii), in which the ingredients are directly charged during the molding to obtain a molded product formed of the composite according to the present invention; and the like can be applied.

(Preferred Embodiments)

The present invention will be below described with reference to the preferred embodiments but the present invention is not limited to these preferred embodiments.

In addition, the hinge characteristics were evaluated by forming a test piece having a shape as shown in Fig. 1 to evaluate on the basis of the following standard:

Number of samples: n = 10

Test method:

1) The sample is left unattended for 24 hours or more under an environment that a temperature is 23°C and RH is 50% and then the hinge member is bent 100 times at an angle of 180° under the same conditions.

2) The sample is left unattended for 24 hours or more under an environment that a temperature is -20°C and then the hinge member is bent 100 times at an angle of 180° under the same conditions.

Evaluation A:

A number of breakages of the hinge member during bending 100 times (the smaller value is superior.)

Evaluation B:

The state of the hinge member after bending 100 times was evaluated by the following evaluation standard and represented by the average (the larger value is superior):

5: The abnormality is hardly found.

4: Fine cracks are generated on a surface of the hinge member.

3: Cracks generated on the surface of the hinge member are grown.

2: The cracks generated on the surface of the hinge member are further grown toward the central portion, whereby the hinge member is remarkably thinned.

1: A break is generated in the thinned hinge member, whereby the hinge member is about to be cut.

0: The hinge member was broken.

Examples 1 to 8 and Comparative Example 1 to 2

Various kinds of polymer (ingredient B) prescribed in the present invention were added to a polybutylene terephthalate resin ("Duranex" manufactured by Polyplastics Co., Ltd.) at a ratio shown in Table-1 and the resulting mixture was molten and blended in a biaxial extruder having an inside diameter of 30 mm to prepare the composite in the form of pellet.

Subsequently, a hinged test piece and a standard test piece for measuring various kinds of physical property having a shape as shown in Fig. 1 were formed using an injection molding machine to measure the hinge characteristics and other characteristics. The measurements of general physical properties were carried out in accordance with ASTM. Also the composite without the polymer (ingredient B) according to the present invention was evaluated in the same manner for comparison.

As obvious from the results shown in Table-1, the addition of the polymer (ingredient B) prescribed in the present invention is remarkably effective for the improvement of hinge characteristics.

0 287 245

Table 1

| | | Composition | | | | Hinge characteristics | | | | Tensile | | Bending elastic modulus (kg/cm$^2$) |
|---|---|---|---|---|---|---|---|---|---|---|---|---|
| | | Thermoplastic polyester resin Kind  Quantity (parts by weight) | | Polymer added Kind  Quantity (parts by weight) | | 23°C, 50%RH | | -20°C | | Strength (kg/cm$^2$) | Elonga-tion (%) | |
| | | | | | | Evalua-tion A | Evalua-tion B | Evalua-tion A | Evalua-tion B | | | |
| Example | 1 | Polybutylene tere-phthalate resin A | 95.0 | Acrylonitril-styrene copolymer | 5.0 | 0 | 3.0 | 0 | 2.6 | 570 | 37 | 27,200 |
| | 2 | " | 70.0 | " | 30.0 | 0 | 4.0 | 0 | 3.5 | 612 | 32 | 29,700 |
| | 3 | Polybutylene tere-phthalate resin B | 95.0 | " | 5.0 | 0 | 3.6 | 0 | 3.1 | 576 | 210 | 28,000 |
| | 4 | " | 80.0 | " | 20.0 | 0 | 4.0 | 0 | 3.6 | 592 | 196 | 29,200 |
| | 5 | " | 70.0 | " | 30.0 | 0 | 4.5 | 0 | 4.0 | 610 | 180 | 29,800 |
| | 6 | " | 55.5 | " | 45.0 | 0 | 3.8 | 0 | 3.5 | 640 | 160 | 32,000 |
| | 7 | " | 70.0 | Polymethyl-methacrylate | 30.0 | 0 | 3.2 | 0 | 2.7 | 604 | 162 | 29,500 |
| | 8 | " | 70.0 | Polystyrene | 30.0 | 0 | 3.5 | 0 | 3.0 | 598 | 157 | 29,400 |
| Comparative Example | 1 | Polybutylene tere-phthalate resin A *1 | 100 | — | | 8 | 0.3 | 10 | 0 | 569 | 38 | 26,000 |
| | 2 | Polybutylene tere-phthalate resin B *2 | 100 | — | | 4 | 0.8 | 10 | 0 | 583 | 200< | 26,200 |

*1  "Duranex 2000" manufactured by Polyplastics Co., Ltd.

*2  "Duranex 2002" manufactured by Polyplastics Co., Ltd.

7. A hinge member as set forth in any preceding claim, in which the proportion of polymer (B) is in the range 3 to 50 parts by weight.

(Effects of the Invention)

As obvious from the above description and the preferred embodiments, the hinge member according to the present invention formed of the composite comprising the thermoplastic polyester and the polymer obtained by homopolymerizing one kind or copolymerizing two kinds or more selected from the group consisting of vinyl cyanide compounds, acrylic esters, acrylic acid, methaacrylic esters, methacrylic acid and aromatic vinyl compounds has remarkably superior hinge characteristics without a disadvantage that other physical properties are lowered.

Such the hinge member can be used as various kinds of hinge member used in the fields of cars, electric and electronic parts, building materials, miscellaneous goods and the like. More concretely speaking, the hinge member according to the present invention can be suitably used for a connector for use in cars, connector for use in electric apparatus, and the like.

## Claims

1. A hinge member obtained by molding a composite comprising

(A) a thermoplastic polyester resin of 99 to 40 parts by weight and

(B) a polymer obtained by homopolymerizing one kind or copolymerizing two kinds or more selected from the group consisting of vinyl cyanide compounds, acrylic esters, acrylic acid, methacrylic esters, methacrylic acid and aromatic vinyl compounds of 1 to 60 parts by weight.

2. A hinge member as set forth in claim 1, in which the polyester resin (A) is polyalkylene terephthalate.

3. A hinge member as set forth in claim 1, in which the polyester resin (A) is polybutylene terephthalate.

4. A hinge member as set forth in any preceding claim, in which the polyester resin (A) has been modified by cross-linking or graft polymerisation.

5. A hinge member as set forth in any preceding claim, in which the polymer (B) has been modified by copolymerisation with a small amount of an ethylenic compound, rubbery ingredient or acid anhydride.

6. A hinge member as set forth in any preceding claim, in which the polymer (B) is an acrylonitrilstyrene copolymer, polymethyl methacrylate or polystyrene.

Fig. 1

(a)

A ↑                    ↑ A'

27

1

(b)

15

7

1

(c)

0.35

1

1.5    2.5

4.0